## Europäisches Patentamt
## European Patent Office
## Office européen des brevets

(19)

(11) Publication number: **0 124 260**
**A2**

(12)

# EUROPEAN PATENT APPLICATION

(21) Application number: **84302117.1**

(51) Int. Cl.³: **H 04 B 3/56**

(22) Date of filing: **28.03.84**

(30) Priority: **29.04.83 GB 8311889**

(43) Date of publication of application: **07.11.84** Bulletin **84/45**

(84) Designated Contracting States: **BE DE NL**

(71) Applicant: **The General Electric Company, p.l.c., 1 Stanhope Gate, London W1A 1EH (GB)**

(72) Inventor: **Jones, Alan John, 11 Wolstanton Road Chesterton, Newcastle Under Lyme Staffordshire (GB)** Inventor: **Lamont, Iain Andrew james, 19 Church Lane, Oulton Stone Staffordshire (GB)**

(74) Representative: **Pope, Michael Bertram Wingate, Central Patent Department The General Electric Company, p.l.c. Hirst Research Centre East Lane, Wembley Middlesex HA9 7PP (GB)**

(54) **Power supply line carrier communication systems.**

(57) A transmitter/receiver unit for use in a two way electrical power supply line carrier communication system. The unit includes two conductors (3, 5) for connection to the supply line, and a transmitter (1) and a receiver (7) each connected across the two conductors. A first winding (9) of a transformer is connected in series between the transmitter (1) and receiver (7) on one of the conductors (3). Switching means (13, 15, 21) is provided which is operable to control the impedance across a second winding (11) of the transformer so that the first winding (9) presents a relatively high impedance to carrier signals when the receiver (7) is operating, and a relatively low impedance to carrier signals when the transmitter is operating.

ACTORUM AG

-2-

The invention relates to two way electrical power supply line carrier communication systems. Such systems are frequently used, for example, for the purposes of controlling heating, lighting etc., within a building, or for communicating between a transformer chamber and electricity consumers for the purpose of remote meter reading, load control etc.,

Such two-way systems frequently include, at points along the power line, transmitter/receiver units incorporating a transmitter and a receiver each connected across the power line, for transmitting relatively high level carrier signals, e.g. 5 volts r.m.s., and receiving relatively low level carrier signals, e.g.5 millivolts r.m.s., which have been imposed on the power line at a remote point. As many forms of transmitter, however, present a low impedance to an incoming carrier signal, the transmitter can severely attenuate the signals received by the receiver within the unit.

It is an object of the invention to provide a transmitter/receiver unit for use in a two-way electrical power supply line communication system wherein this problem is overcome.

According to the present invention a transmitter/receiver unit for use in a two way electrical power supply line carrier communication system said unit comprising two conductors for connection to said line and a transmitter and a receiver each connected across said two conductors is characterised in that said unit includes: a transformer having a first winding connected in series with said transmitter across said conductors; and switching means operable to control the impedance across a second winding of said transformer so that the first winding presents a relatively high impedance to carrier signals when the receiver is operating, and a relatively low impedance to carrier signals when the transmitter is operating.

Said switching means is suitably a transistor switching arrangement. In one such arrangement the switching means comprises two transistors each having its

-3-

main current path connected between a respective end of said second winding and one of said conductors, and said second winding is centre tapped to said one conductor.

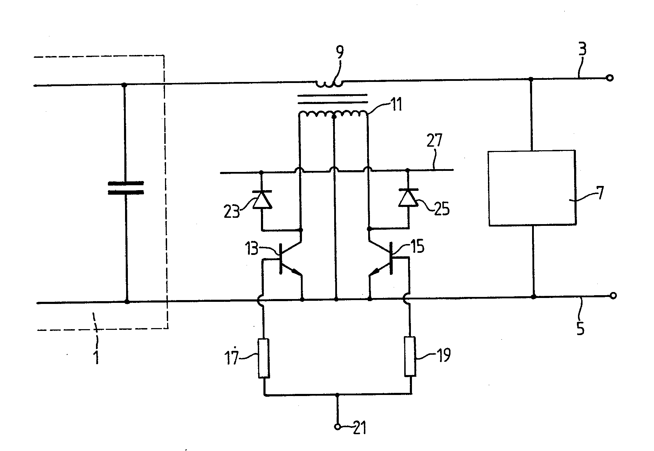

One transmitter/receiver unit for use in a two-way electrical power supply line carrier communication system in accordance with the invention will now be described, by way of example only, with reference to the accompanying figure which is a schematic diagram of the unit.

Referring to the Figure, the unit includes a transmitter, indicated as 1, which is connected across conductors 3 and 5 which are respectively connected to the live and neutral rails of an electrical power supply line (not shown).

The transmitter produces a sinusoidal waveform output signal and incorporates an output stage (not shown) which presents a low impedance across the conductors 3 and 5, e.g. a capacitively coupled sinewave amplifier coupled to the conductors 3 and 5 via a tuned output filter.

A receiver 7 is also connected across the conductors 3, 5 between the transmitter 1 and the power line. The receiver 7 includes circuitry (not shown) to protect it from spikes on the lower line, this circuitry also protecting it from the signal from the local transmitter 1. Between the transmitter 1, and the receiver 7, there is connected in series on the conductor 3, the primary 9 of a ferrite core transformer, the primary having an inductance such as to present a high impedance to carrier signals. A secondary 11 of the transformer is centre tapped to the conductor 5 whilst each end of the secondary is connected to the collector of a respective transistor 13 or 15, the emitters of the two transistors being connected to the conductor 5. The bases of the transistors 13,15, are connected via respective resistors 17,19 to a terminal 21. Respective diodes 23,25 are connected between the collectors of the transistors and a voltage rail 27.

-4-

In use, when a control voltage is applied to the terminal 21 causing the transistors 23, 25 to conduct the secondary 11 of the transformer is short circuited causing the primary 9 to present a low impedance at the carrier signal frequency. The transmitter 1 is then able to transmit carrier signals onto the power line. As current will flow in opposite senses about the paths defined by the two halves of the secondary 11, the short circuit is effective for both halves of the alternating current in the primary.

When reception of carrier signals on the power line by the receiver 7 is required, the control voltage is removed from the terminal 21, causing the transistors 23, 25 to become non-conducting. The transformer primary 9 then presents a high impedance to carrier frequency signals, and effectively isolates the transmitter 1 from the receiver 7.

The diodes 23, 25 are biassed so that they are normally non-conducting, and are present to prevent damage to the transistors 13, 15 in the event of transients on the power line.

CLAIMS

1.      A transmitter/receiver unit for use in a two way electrical power supply line carrier communication system said unit comprising two conductors (3, 5) for connection to said line and a transmitter (1) and a receiver (7) each connected across said two conductors said unit being characterised in that said unit includes: a transformer having a first winding (9) connected in series with said transmitter (1) across said conductors; and switching means (13, 15, 21) operable to control the impedance across a second winding (11) of said transformer so that the first winding (9) presents a relatively high impedance to carrier signals when the receiver (7) is operating, and a relatively low impedance to carrier signals when the transmitter is operating.

2.      A transmitter/receiver unit according to Claim 1 in which said switching means (13, 15, 21) is a transistor switching arrangement.

3.      A transmitter/receiver unit according to Claim 2 in which said switching means comprises two transistors (13, 15) each having its main current path connected between a respective end of said second winding (11) and one of said conductors (15), and said second winding (11) is centre tapped to said one conductor (5).

4.      A transmitter/receiver unit according to any one of the preceding claims in which said transformer has a ferrite core.

1/1

0124260